# NEW EUROPEAN PATENT SPECIFICATION

(11) **EP 3 315 434 B2**
(45) Date of publication and mention of the opposition decision: **19.07.2023**
(45) Mention of the grant of the patent: 05.08.2020
(21) Application number: 17197765.5
(22) Date of filing: 23.10.2017
(51) Int. Cl.: B65G 33/04, B65B 35/10

(54) **SYSTEM FOR FEEDING OBJECTS TO A MULTI-ENTRANCE WORK GROUP**
SYSTEM ZUM ZUFÜHREN VON GEGENSTÄNDEN IN EINER MEHRSTUFIGEN ARBEITSGRUPPE
SYSTÈME D'ACHEMINEMENT D'OBJETS DANS UN GROUPE DE TRAVAIL À PLUSIEURS ENTRÉES

(30) Priority: 28.10.2016 IT 201600109401
(43) Date of publication of application: 02.05.2018
(73) Proprietor: Bonino S.r.l., 15121 Alessandria (AL) (IT)
(72) Inventor: BONINO, Giovanni, I-15121 ALESSANDRIA (IT); BONINO, Alessandro, I-15121 ALESSANDRIA (IT)
(74) Representative: Leihkauf, Steffen Falk

(56) References cited:
- EP-A1- 2 394 915
- EP-A1- 2 933 209
- WO-A1-2015/037022
- FR-A1- 2 454 423
- JP-A- 2000 025 930
- US-A- 4 960 156

## Description

The present invention generally relates to systems and methods for arranging objects which are substantially identical in shape and have a predetermined orientation, in order to feed such objects in a controlled manner to a working or handling station which simultaneously receives and handles a plurality of such objects in parallel. In particular, the invention relates to a system for arranging and feeding food capsules, especially beverage preparations (coffee capsules), to a filling machine having a plurality of parallel filling lines with respective entrance points for the empty capsules to be filled (multi-entrance filling machine).

A system for arranging coffee capsules at a multi-entrance filling machine is known. Such a known system comprises an orientation device for orienting the empty capsules in the desired orientation (usually with their opening upwards), and a very wide conveyor belt which receives the oriented capsules from the orientation device, and accumulates and conveys them along a number (typically six) of parallel paths, arranged side-by-side, to the filling machine having six entrances for the empty capsules to be filled. Each entrance of the filling machine corresponds to one of the six conveying paths defined on the conveyor belt, which arranges the empty capsules in a single row for each entrance of the filling machine, which capsules are accumulated in mutual contact and pushed towards/into the entrance so as to be simultaneously picked up by the filling machine and filled.

The known system requires a large number of photocells for controlling the arrangement of each of the single rows of capsules for each entrance of the filling machine. Moreover, conveying a large number of rows of capsules along parallel paths from the orientation device to the filling machine requires a bulky, heavy and expensive conveyor belt, as well as a high consumption of space and electrical energy. Finally, the arrangement of a plurality of parallel conveying paths increases the maintenance costs and the occurrence of system failures and shutdowns. US4960156 describes an apparatus for topping off containers with liquid which forms a closest state of the art for the invention. US4960156 discloses a system according to the preamble of claim 1 and a method according to the preamble of claim 11.

Therefore, it is the object of the present invention to provide a system for arranging objects at a multi-entrance work group, having such features as to overcome at least some of the drawbacks of the prior art.

It is a particular object of the invention to suggest a system for arranging capsules for beverage preparations, especially coffee, at a multi-entrance filling machine, having such features as to reduce the number of sensors for controlling the correct arrangement of the capsules, reduce the size, weight and energy consumption of the conveyor, and simplify the maintenance.

These and other objects are achieved by a system according to claim 1 and a method according to claim 11. The dependent claims relate to advantageous embodiments.

According to an aspect of the invention, the system for arranging objects at a multi-entrance work group comprises the features of claim 1.

The screw distributor allows to employ only one conveying path for carrying the objects and feeding, however, a plurality of entrances of the multi-entrance work group.

The conveyor cost, the complexity of the control unit and the number of sensors for detecting the presence of the objects on the conveyor are thus decreased. Moreover, also the size, weight and energy consumption of the conveyor are reduced.

Finally, using a distribution member (screw) separate from the conveying channel facilitates the adaptation of the system in case of changes in the position of the entrance points, changes in the number of the entrance points, and changes in the object conveyed and placed.

In order to better understand the invention and appreciate the advantages thereof, some embodiments will be described below, by way of non-limiting example, with reference to the drawings, in which:

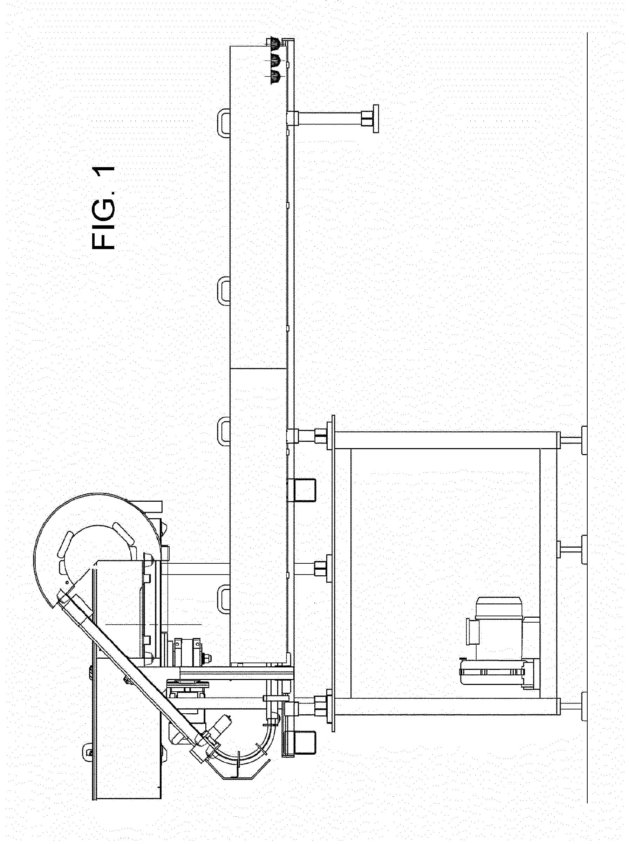

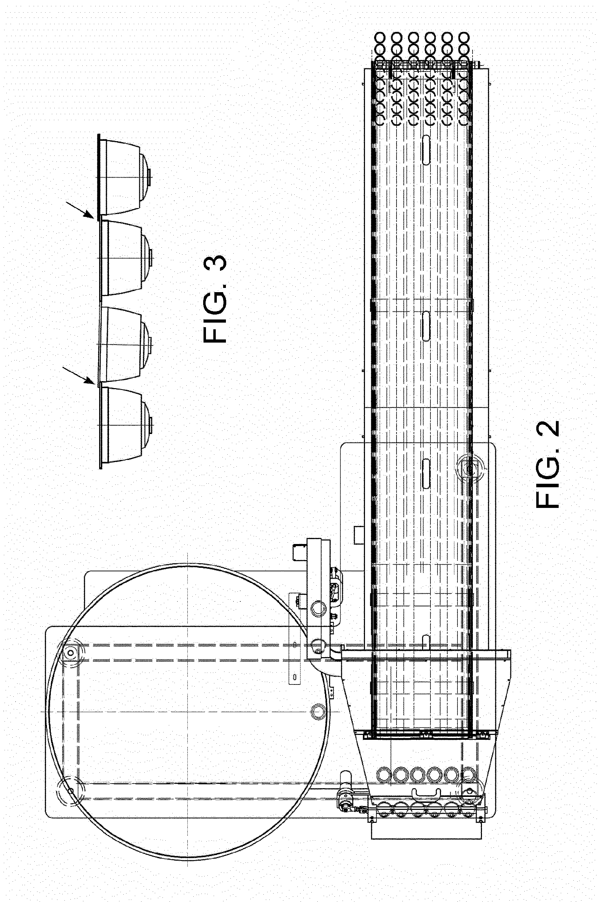

figures 1 and 2 show side and top views of a system for arranging coffee capsules according to the prior art,
figure 3 shows a problem of overlapping the edges of the capsules accumulated on the conveyor of the prior art,
figure 4 shows a top view of a system for arranging objects according to an embodiment of the invention, figure 5 shows a side view of the system for arranging objects in figure 4,
figure 6 shows a top view of a detail of the system for arranging objects according to an embodiment of the invention,
figure 7 shows a side view of the detail in figure 6,
figure 8 shows a rear view of the detail in figure 6,
figure 8A shows a section view of the detail in figure 6,
figure 9 shows a perspective view of the detail in figure 6.

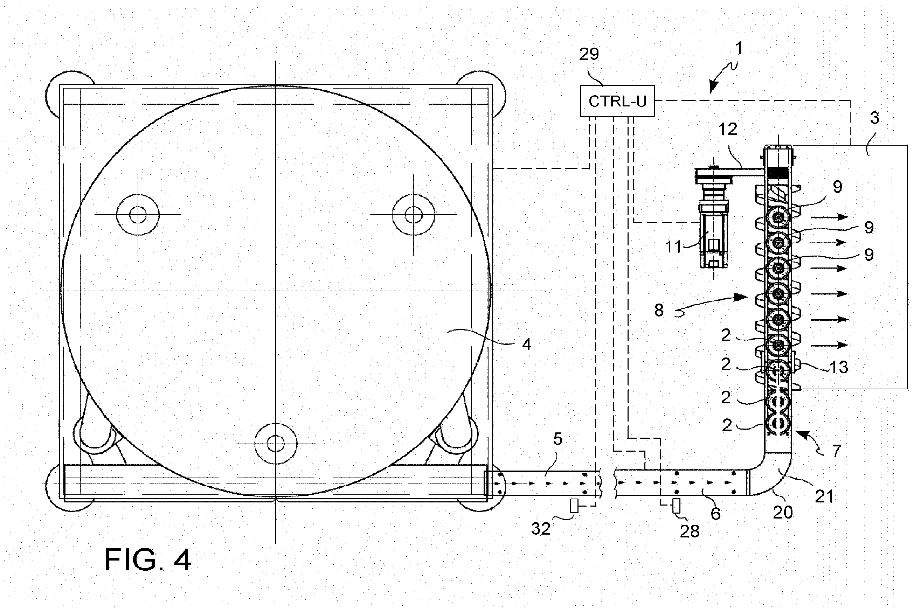

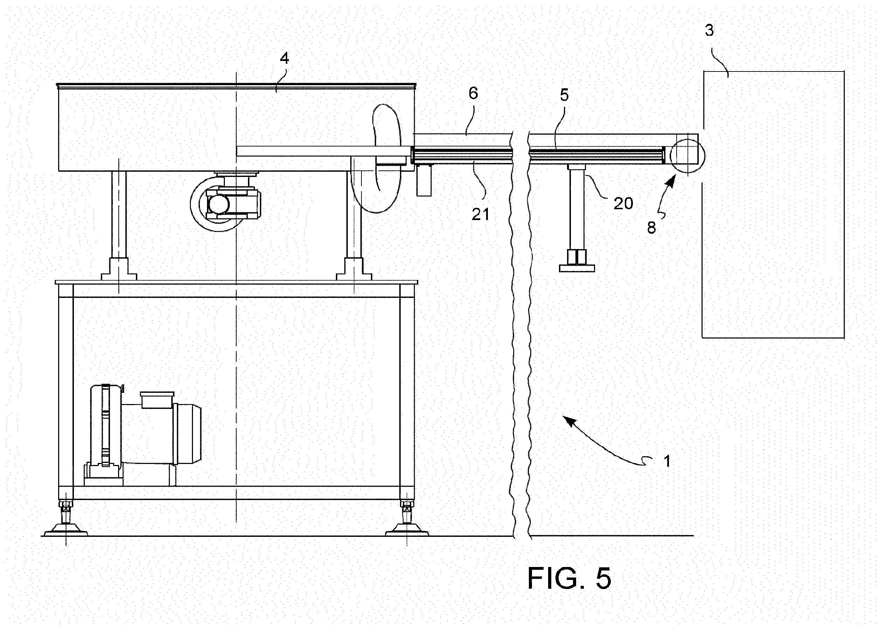

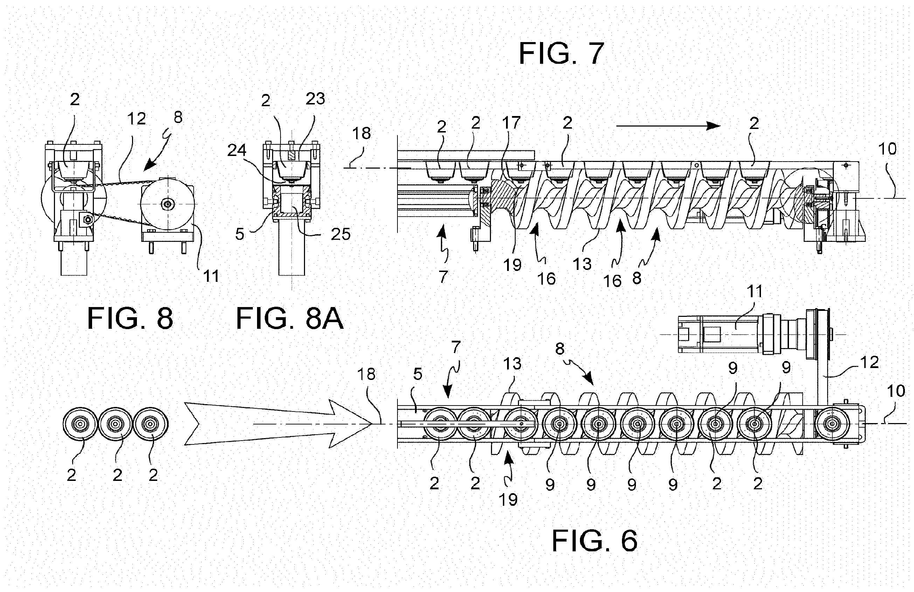

With reference to figures 4 to 9, a system 1 for providing objects 2 at a multi-entrance work group 3 comprises an orientation device 4 for orienting the objects 2 with a desired orientation, as well as a conveyor 5 connected to the orientation device 4 and adapted to receive the objects 2 with the desired orientation from the orientation device 4, and convey the oriented objects 2 in a single row (while maintaining an equal orientation of the oriented objects 2) along a conveying path 6 up to a (final or intermediate) pickup section 7 of the conveying path 6.

System 1 further comprises a screw distributor 8 arranged at the pickup section 7 of the conveying path 6 and extending along a predetermined number of entrance points 9 of the multi-entrance work group 3. The screw distributor 8 comprises a helical wall 13 which is shaped and capable of being actuated in rotation so as to engage a predetermined number of objects 2 in sequence from the pickup section 7, and place each of the engaged objects 2 in one of said entrance points 9 of the multi-entrance work group 3, respectively.

Using a single conveying path in combination with a screw distributor for replenishing objects to a plurality of entrances of the multi-entrance work group reduces the conveyor cost, the complexity of the control unit, and the number of sensors for detecting the presence of the objects on the conveyor. The size, weight and power consumption of the whole system 1 are also reduced.

Finally, using a distribution member (screw distributor 8) separate from the conveying channel formed by the conveyor 5 facilitates the adaptation of the system 1 in case of changes in the position of the entrance points 9, changes in the number of the entrance points 9, and changes in the shape of the object 2 conveyed and positioned.

In accordance with an embodiment, the helical wall 13 forms a worm screw (with or without central shaft), rotatably supported about an axis of rotation 10 and capable of being rotated about the axis of rotation 10 by means of an electric motor 11, such as a brushless motor, and a transmission 12, preferably a toothed belt transmission.

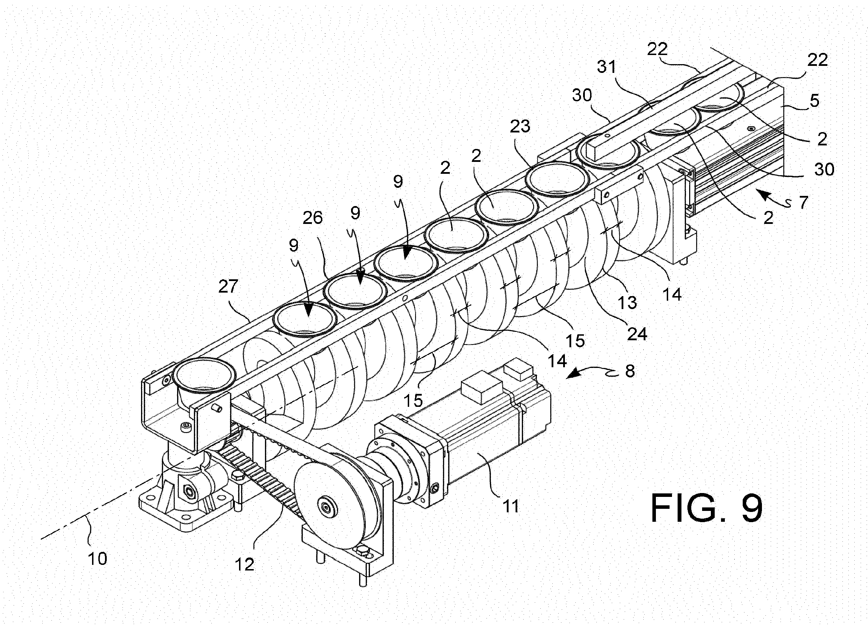

The helical wall 13 defines a longitudinal pitch, i.e. the free distance between two longitudinally adjacent turns, and a longitudinal thickness 14 of the single turns (shown in figure 9) which determine the mutual distance(s) of the objects 2 and the width(s) of the worm screw grooves 16 accommodating the objects 2.

The predetermined number of objects 2 (six, for example) from the pickup section 7 can thus be easily distributed with high speed (such as 0.45 seconds) and accuracy in the entrance points 9 of the multi-entrance work group 3 by selecting the geometry of the helical wall 13 and the number of turns of the helical wall 13 for each distribution cycle. The positioning of the objects 2 is a function of the geometry of the helical wall 13 and of the angular (rotation) position thereof with respect to a reference angular (rotation) position, whereas the number of objects 2 positionable in a corresponding number of entrance points 9 is a function of the number of complete 360° revolutions of the helical wall 13 for each distribution cycle, provided that the total number of turns of the helical wall 13 is sufficient to accommodate the predetermined number of objects 2 during a single distribution cycle.

According to an embodiment, the thickness 14 and pitch 15 of the helical wall 13 are substantially constant along the longitudinal extension thereof. However, a front end 17 of the helical wall 13 may be thinned to better fit between two objects 2 accumulated in the pickup section 7 and engage them individually in sequence.

In accordance with an embodiment, a guide system 27 is formed along the helical wall 13 (worm screw), adapted to form a constraint against the movements of the objects 2 in the direction transverse to the axis of rotation 10. The guide system 27 is configured to maintain the orientation of the objects 2 while they are picked up, one by one, and accommodated individually in the grooves 16 formed by the helical wall 13, and carried to the respective entrance point 9 of the multi-entrance work group by means of the rotation of the helical wall 13.

According to an embodiment, the guide system 27 forms an extension of at least some of the guide surfaces of conveyor 5 (figure 9), which will be described below.

Advantageously, the axis of rotation 10, i.e. the longitudinal axis, of the worm screw formed by the helical wall 13 is at least approximately aligned with or parallel to an accumulation/staking or output direction 18 of the objects 2 in the pickup section 7.

Therefore, conveyor 5 is not required to push the single object 2 transversely into the first groove 19 of the helical wall only once it has been cleared (when the previous object has already moved to the next second groove), but the helical wall 13 naturally and continuously screws into the row of objects 2 already arranged in the correct position and with the correct feeding direction. This speeds up the distribution of the objects 2 in the entrance points 9 and prevents the objects 2 from undesirably snapping and bumping against the screw distributor 8.

Alternatively, if the system layout so requires, the axis of rotation 10, i.e. the longitudinal axis, of the worm screw may be oriented in the direction transverse or oblique to the accumulating or output direction 18 of the pickup section 7.

According to embodiments, the orientation device 4 may comprise an orientation device of rotary or gravitational or different type, widely known in the field. Examples of rotary orienters are described in EP2883818A1, for example. Examples of gravitational orienters are described in WO2015125161A1, for example.

Conveyor 5 may comprise a support structure 20 forming a channel 21 extending along the conveying path 6 and adapted to receive a single row of objects 2, and one or more support and sliding surfaces 22 extending along the conveying path 6 and adapted to support the objects 2 in channel 21, where the single objects 2 are hanging/resting in channel 21 with their open end 23 (in case of coffee capsules) facing upwards and with their closed end 24 facing downwards.

Conveyor 5 comprises a blowing system 25 which directs one or more air flows into channel 21, so as to move the objects 2 in the conveying direction along the conveying path 6 and exert an accumulation thrust thereon, in the pickup section 7, while they are in pressing contact against one another in the aforesaid output direction 18.

Even in the case of a conveyor other than that described herein, such as a belt conveyor, a band conveyor, a gravity chute conveyor, etc., it is still advantageous to provide the conveyor with means exerting on the objects 2, in the pickup section 7, an accumulation thrust so that they are in pressing contact against one another in the aforesaid output direction 18. Such an accumulation thrust allows, indeed, a quick engagement of the predetermined number of objects 2 by means of the screw distributor 8 for quickly distributing them into the entrance points 9.

Means for such an accumulation thrust may comprise one or more blowers, one or more mechanical pushers, one or more star wheels, downwards tilted or vertical accumulation sections, etc.

When arranging coffee capsules, the support and sliding surfaces 22 may comprise two lateral longitudinal bars 30 extending on two opposite lateral sides of the conveying path 6 and spaced apart so as to provide both a support from underneath for a circumferential edge 26 of the capsule (figure 9).

In order to prevent the empty (and thus very lightweight) capsules from escaping from above, the support and sliding surfaces 22 may also comprise a third longitudinal upper bar 31 extending over an upper side of the conveying path 6 and spaced apart from the lateral bars 30 so as to provide a further guide from above and an anti-escape support for the capsule (figure 9).

The support and sliding surfaces 22 extend into the pickup section 7 at least up to where the screw distributor 8 engages the objects 2 (coffee capsules). Advantageously, at least a part of the support and sliding surfaces 22 extend along the helical wall 13 and form the aforesaid guide system 27 of the screw distributor 8.

In accordance with an embodiment (figure 9), the two lateral longitudinal bars 30 extend both along the pickup section 7 and along the helical wall 13, whereas the third longitudinal upper bar 31 extends along the pickup section 7 and ends close to the front end 17 of the helical wall 13, so as to allow the empty coffee capsules arranged in the entrance points 9 to be gripped and lifted upwards by means of the gripping means of the filling machine 3.

The conveying path 6 may comprise one or more bendings to better fit the space constraints in the installation site. Preferably, the conveying path is substantially horizontal.

In order to ensure the presence, in the pickup section 7, of a row with a number of objects 2 greater than the predetermined number of entrance points 9, a minimum filling sensor 28 (e.g. a photocell) may be provided, located upstream of the pickup section 7 or at the pickup section 7 in a position corresponding to a row length sufficient to meet the minimum filling criterion.

Similarly, in order to avoid the objects 2 from being accumulated in the conveyor 5 up to the vicinity of an output point of the orientation device 4, a maximum filling sensor 32 (e.g. a photocell) may be included, located at the conveyor 5 at a safe distance from the output point of the orientation device 4 corresponding to the maximum filling criterion.

An electronic control unit 29 of system 1 controls the orientation device 4 as a function of signals from the minimum filling sensor 28 and the maximum filling sensor 32. In addition, the electronic control unit 29 of system 1 may control the conveyor 5 as a function of signals from the minimum filling sensor 28 and/or the maximum filling sensor 32.

For example, the control unit 29 activates or accelerates the operation of the orientation device 4 in the case of less filling than the preset minimum filling, deactivates or slows down the operation of the orientation device 4 in the case of greater filling than the preset maximum filling, and/or stops or slows down the actuation of the screw distributor 8 in the case of insufficient filling of the pickup section 7.

The actuation of the orientation device 4 and the conveyor 5 must not necessarily be synchronous with the working cycle of the multi-entrance work group 3, e.g. with the filling cycle of the coffee filling machine, as the objects 2 accumulated in the pickup section 7 and upstream of the pickup section 7 form a buffer of objects 2 to be processed.

The actuation of the distribution screw 8 by means of the electronic control unit 29 occurs synchronously with the actuation of the multi-entrance work group 3.

In a combined system for arranging and filling coffee capsules, the control unit 29 also controls the filling machine or cooperates with a control unit of the filling machine for actuating the screw distributor 8 synchronously with the filling cycle of the filling machine.

The invention is also directed to a method for arranging objects 2 at a multi-entrance work group 3 according to claim 11.

The present invention may be particularly advantageously implemented for arranging empty coffee capsules at a multi-entrance coffee filling machine, and possibly filling the capsules with coffee by means of the filling machine. Therefore, the terms "multi-entrance work group" and "object" take, on the one hand, their general meaning, and on the other they indicate a "multi-entrance machine for filling a substance for the preparation of a beverage, especially coffee" and a "capsule for a substance for the preparation of a beverage, especially coffee", respectively.

Similarly, the features of the system and method described with reference to coffee capsules and to a coffee filling machine are also understood to be described explicitly with reference to a general object and to a general multi-entrance work group.

Those skilled in the art will understand that the term multi-entrance work group denotes a general work group adapted and configured to carry out a work with the plurality of objects fed thereto. Such a work may comprise either the handling or processing of objects to modify them or an activity using and combining each of the objects together with another material or another component for manufacturing a more advanced finished or semi-finished product. The work performed by the multi-entrance work group may be a deformation, cutting, molding, staining, inspection, heat treatment or cleaning work on the objects. Alternatively, the work performed by the multi-entrance work group may be a work of filling the objects with an additional material or combining each of the objects with an additional component or combining a plurality of such objects together. The term "entrance point(s)" indicates the position(s) in which the objects are fed into, or made available for, the multi-entrance work group. The processing or handling carried out by the multi-entrance work group does not necessarily occur in the entrance points, but it can take place in an innermost part of the multi-entrance work group. The multi-entrance work group may be a device for simultaneously filling a plurality of capsules for the preparation of beverages (such as coffee) with a beverage or a beverage powder (such as ground coffee). The term "object" here denotes a capsule for the preparation of coffee which can be filled with ground coffee powder.

Those skilled in the art may obviously make further changes and variations to the system and method of the present invention in order to meet contingent and specific needs, which changes and variations are within the protection scope of the invention as defined by the following claims.

## Claims

1. System (1) for arranging objects (2) at a multi-entrance work group (3), comprising:
- a conveyor (5) adapted to convey the oriented objects (2) in a single row along a conveying path (6) up to a pickup section (7) of the conveying path (6),
- a screw distributor (8) arranged at the pickup section (7) and extending along a predetermined number of entrance points (9) of the multi-entrance work group (3), said screw distributor (8) comprising a helical wall (13) shaped and operable in rotation so as to engage a number of said objects (2) corresponding to the predetermined number of entrance points (9) and position each of the engaged objects (2) in one of said entrance points (9), respectively,
**characterized in that** the system is comprising:
- an orientation device (4) for orienting the objects (2) with a desired orientation, and **in that**
- the conveyor (5) is connected to the orientation device (4), and **in that** the conveyor (5) comprises:
- a support structure (20) forming a channel (21) extended along the conveyor path (6) and adapted to receive a single row of objects (2), and
- one or more support and sliding surfaces (22) extended along the conveyor path (6) and adapted to support the objects (2) in the channel (21), wherein the single objects (2) are supported in the channel (21) with an open end (23) facing upwards and with a closed end (24) facing downwards,
- a blowing system (25) which directs one or more air flows into the channel in such a way as to move the objects (2) along the conveyor path (6) and to exercise on them, in the pickup section (7), an accumulation thrust in pressing contact against each other in an output direction (18) towards the screw conveyor (8),
the system (1) comprising:
- a minimum filling sensor (28) located upstream of the pickup section (7) or at the pickup section (7) in a position corresponding to a row length sufficient for satisfying a minimum filling criterion, in order to ensure the presence, in the pickup section (7), of a row with a number of objects (2) greater than the predetermined number of entrance points (9),
- a maximum filling sensor (32) located at the conveyor (5) at a safety distance from an output point of the orientation device (4) corresponding to a maximum filling criterion, in order to avoid the objects (2) from being accumulated in the conveyor (5) up to the vicinity of the output point of the orientation device (4),
- an electronic control unit (29) which controls the orientation device (4) as a function of signals from the minimum filling sensor (28) and the maximum filling sensor (32).

2. System (1) according to claim 1, wherein the helical wall (13) forms a worm screw supported to rotate about an axis of rotation (10) and actuated in rotation about the axis of rotation (10) by means of an electric motor (11) and a toothed belt transmission (12).

3. System (1) according to any one of the preceding claims, wherein the thickness (14) and the pitch (15) of the helical wall (13) are substantially constant along the longitudinal extension thereof, except for a thinned front end (17) to better insert itself between two objects (2).

4. System (1) according to any one of the preceding claims, wherein a guide system (27) is formed along the helical wall (13) which prevents movements of the objects (2) in at least one direction transverse to the axis of rotation (10) of the helical wall (13),
said guide system (27) being configured in such a way as to maintain the same orientation as the objects (2) while they are individually accommodated in grooves (16) formed by the helical wall (13) and carried each in the respective entrance point (9).

5. System (1) according to claim 4, wherein the guide system (27) forms an extension of guide surfaces of the conveyor (5).

6. System (1) according to any one of the preceding claims, wherein the axis of rotation (10) of the helical wall (13) is substantially parallel to an accumulation and/or output direction (18) of the objects (2) in the pickup section (7).

7. System (1) according to any one of the preceding claims, wherein the conveyor (5) comprises means which exert an accumulation thrust on the objects (2) in pressing contact against each other in an output direction (18) towards the screw conveyor (8), in the pickup section (7).

8. System (1) according to any one of the preceding claims, wherein the support and sliding surfaces (22) are formed by:
- two lateral longitudinal bars (30) extended on two opposite lateral sides of the conveyor path (6) and spaced from each other in such a way as to provide both a support from underneath for a circumferential edge (26) of the object (2),
- a third longitudinal upper bar (31) extended on an upper side of the conveyor path (6) and spaced from the lateral bars (30) so as to provide a further guide from above and an anti-escape support for the object (2).

9. System (1) according to any one of the preceding claims, wherein the conveyor path (6) is substantially horizontal.

10. System (1) according to any one of the preceding claims, comprising said multi-entrance work group (3), wherein said objects (2) are coffee capsules and said multi-entrance work group (3) is a coffee filling machine.

11. Method for arranging objects (2) at a multi-entrance work group (3), said method comprising the steps of:
- orienting the objects (2) with a desired orientation,
- conveying the objects (2) with the desired orientation in a single row along a conveyor path (6) up to a pickup section (7) of the conveyor path (6) using a conveyor (5),
- arranging a screw distributor (8) with a helical wall (13) at the pickup section (7) of the conveyor path (6) and extending the helical wall (13) along a predetermined number of entrance points (9) of the work group (3),
- rotating the helical wall (13) so as to engage a number of objects (2) corresponding to the predetermined number of entrance points (9) and so as to place each of the engaged objects (2) in one of said entrance points (9),
**characterized in that** the conveyor (5) comprises:
- a support structure (20) forming a channel (21) extended along the conveyor path (6) and adapted to receive a single row of objects (2), and
- one or more support and sliding surfaces (22) extended along the conveyor path (6) and adapted to support the objects (2) in the channel (21), wherein the single objects (2) are supported in the channel (21) with an open end (23) facing upwards and with a closed end (24) facing downwards,
- a blowing system (25) which directs one or more air flows into the channel in such a way as to move the objects (2) along the conveyor path (6) and to exercise on them, in the pickup section (7), an accumulation thrust in pressing contact against each other in an output direction (18) towards the screw conveyor (8),
wherein the method comprises using a system (1) for arranging objects (2) at a multi-entrance work group (3) according to claim 1.

12. Method according to claim 11, wherein said objects (2) are coffee capsules and said multi-entrance work group (3) is a coffee filling machine.

## Patentansprüche

1. System (1) zum Anordnen von Objekten (2) an einer Arbeitsgruppe (3) mit mehreren Einritten, umfassend:
- eine Fördereinrichtung (5), welche dazu eingerichtet ist, die ausgerichteten Objekte (2) in einer einzelnen Reihe entlang einer Förderstrecke (6) hinauf zu einem Aufnahmeabschnitt (7) der Förderstrecke (6) zu fördern,
- einen Schraubenverteiler (8), welcher an dem Aufnahmeabschnitt (7) angeordnet ist und sich entlang einer vorbestimmten Anzahl von Eintrittsstellen (9) der Arbeitsgruppe (3) mit mehreren Eintritten ausdehnt, wobei der Schraubenverteiler (8) eine spiralförmige Wand (13) umfasst, welche derart gebildet und drehbetriebsfähig ist, dass sie eine Anzahl der Objekte (2) in Eingriff nimmt, welche der vorbestimmten Anzahl von Eintrittsstellen (9) entspricht, und jedes der in Eingriff genommenen Objekte (2) in jeweils einer der Eintrittsstellen (9) positioniert,
**dadurch gekennzeichnet, dass** das System umfasst:
- eine Ausrichtungsvorrichtung (4) zum Ausrichten der Objekte (2) mit einer gewünschten Ausrichtung, und dass
- die Fördereinrichtung (5) mit der Ausrichtungsvorrichtung (4) verbunden ist, und dass die Fördereinrichtung (5) umfasst:
- eine Halterungsstruktur (20), welche einen Kanal (21) bildet, welcher entlang der Förderstrecke (6) ausgedehnt ist und dazu eingerichtet ist, eine einzelne Reihe von Objekten (2) aufzunehmen, und
- eine oder mehrere Halterungs- und Gleitflächen (22), welche entlang der Förderstrecke (6) ausgedehnt sind und dazu eingerichtet sind, die Objekte (2) in dem Kanal (21) zu haltern, wobei die einzelnen Objekte (2) mit einem offenen Ende (23) nach oben weisend und mit einem geschlossenen Ende (24) nach unten weisend in dem Kanal (21) gehaltert sind,
- ein Gebläsesystem (25), welches einen oder mehrere Luftströme in einer derartigen Weise in den Kanal leitet, dass es die Objekte (2) entlang der Förderstrecke (6) bewegt und auf diese in dem Aufnahmeabschnitt (7) eine Akkumulationsschubkraft in Druckkontakt gegeneinander in einer Ausgangsrichtung (18) zu der Schraubenfördereinrichtung (8) hin ausübt,
das System (1) umfassend:
- einen Minimalfüllsensor (28), welcher dem Aufnahmeabschnitt (7) vorgelagert ist oder an dem Aufnahmeabschnitt (7) in einer Position angeordnet ist, welche einer für ein Erfüllen eines Minimalfüllkriteriums ausreichenden Reihenlänge entspricht, um sicherzustellen, dass im Aufnahmeabschnitt (7) eine Reihe mit einer Anzahl von Objekten (2) vorhanden ist, die größer ist als die vorbestimmte Anzahl von Eintrittsstellen (9)
- einen Maximalfüllsensor (32), welcher an der Fördereinrichtung (5) in einem Sicherheitsabstand von der Ausgangsstelle der Ausrichtungsvorrichtung (4) angeordnet ist, welcher einem Maximalfüllkriterium entspricht, um zu verhindern, dass sich die Objekte (2) auf dem Förderband (5) bis in die Nähe der Ausgangsstelle der Ausrichtungsvorrichtung (4) stauen,
- eine elektronische Steuereinheit (29), die die Ausrichtvorrichtung (4) in Abhängigkeit von den Signalen des Minimalfüllsensors (28) und des Maximalfüllsensors (32) steuert.

2. System (1) nach Anspruch 1, wobei die spiralförmige Wand (13) eine Schneckenschraube bildet, welche derart gehaltert ist, dass sie sich um eine Drehachse (10) dreht, und mittels eines Elektromotors (11) und eines Zahnriemengetriebes (12) in Drehung um die Drehachse (10) versetzt wird.

3. System (1) nach einem der vorhergehenden Ansprüche, wobei die Dicke (14) und die Steigung (15) der spiralförmigen Wand (13) entlang der longitudinalen Erstreckung davon, mit Ausnahme eines verdünnten vorderen Endes (17), um sich selbst besser zwischen zwei Objekte (2) einsetzen zu können, im Wesentlichen konstant sind.

4. System (1) nach einem der vorhergehenden Ansprüche, wobei entlang der spiralförmigen Wand (13) ein Führungssystem (27) gebildet ist, welches Bewegungen der Objekte (2) in wenigstens einer zu der Drehachse (10) der spiralförmigen Wand (13) transversalen Richtung verhindert,
wobei das Führungssystem (27) in einer derartigen Weise konfiguriert ist, dass es die gleiche Ausrichtung wie die Objekte (2) beibehält, während sie individuell in durch die spiralförmige Wand (13) gebildeten Nuten (16) untergebracht sind und jeweils in der jeweiligen Eintrittsstelle (9) getragen sind.

5. System (1) nach Anspruch 4, wobei das Führungssystem (27) eine Ausdehnung von Führungsflächen der Fördereinrichtung (5) bildet.

6. System (1) nach einem der vorhergehenden Ansprüche, wobei die Drehachse (10) der spiralförmigen Wand (13) im Wesentlichen parallel zu einer Akkumulations- und/oder Ausgangsrichtung (18) der Objekte (2) in dem Aufnahmeabschnitt (7) ist.

7. System (1) nach einem der vorhergehenden Ansprüche, wobei die Fördereinrichtung (5) Mittel umfasst, welche in dem Aufnahmeabschnitt (7) eine Akkumulationsschubkraft auf die Objekte (2) in Druckkontakt gegeneinander in einer Ausgangsrichtung (18) zu der Schraubenfördereinrichtung (8) hin ausüben.

8. System (1) nach einem der vorhergehenden Ansprüche, wobei die Halterungs- und Gleitflächen (22) gebildet sind durch:
- zwei laterale longitudinale Stangen (30), welche an zwei entgegengesetzten lateralen Seiten der Förderstrecke (6) ausgedehnt sind und in einer derartigen Weise voneinander beabstandet sind, dass sie beide eine Halterung von unterhalb für einen umlaufenden Rand (26) des Objekts (2) bereitstellen,
- eine dritte longitudinale obere Stange (31), welche an einer oberen Seite der Förderstrecke (6) ausgedehnt ist und von den lateralen Stangen (30) derart beabstandet ist, dass sie eine weitere Führung von oberhalb und eine Anti-Flucht-Halterung für das Objekt (2) bereitstellt.

9. System (1) nach einem der vorhergehenden Ansprüche, wobei die Förderstrecke (6) im Wesentlichen horizontal ist.

10. System (1) nach einem der vorhergehenden Ansprüche, umfassend die Arbeitsgruppe (3) mit mehreren Eintritten, wobei die Objekte (2) Kaffeekapseln sind und die Arbeitsgruppe (3) mit mehreren Eintritten eine Kaffeefüllmaschine ist.

11. Verfahren zum Anordnen von Objekten (2) an einer Arbeitsgruppe (3) mit mehreren Eintritten, wobei das Verfahren die folgenden Schritte umfasst:
- Ausrichten der Objekte (2) mit einer gewünschten Ausrichtung,
- Fördern der Objekte (2) mit der gewünschten Ausrichtung in einer einzelnen Reihe entlang einer Förderstrecke (6) hinauf zu einem Aufnahmeabschnitt (7) der Förderstrecke (6) unter Verwendung einer Fördereinrichtung (5),
- Anordnen eines Schnraubenverteilers (8) mit einer spiralförmigen Wand (13) an dem Aufnahmeabschnitt (7) der Förderstrecke (6) und Ausdehnen der spiralförmigen Wand (13) entlang einer vorbestimmten Anzahl von Eintrittsstellen (9) der Arbeitsgruppe (3),
- Drehen der spiralförmigen Wand (13), um eine Anzahl von Objekten (2) in Eingriff zu nehmen, welche der vorbestimmten Anzahl von Eintrittsstellen (9) entspricht, und um jedes der in Eingriff genommenen Objekte (2) in einer der Eintrittsstellen (9) zu platzieren,
**dadurch gekennzeichnet, dass** die Fördereinrichtung (5) umfasst:
- eine Halterungsstruktur (20), welche einen Kanal (21) bildet, welcher entlang der Förderstrecke (6) ausgedehnt ist und dazu eingerichtet ist, eine einzelne Reihe von Objekten (2) aufzunehmen, und
- eine oder mehrere Halterungs- und Gleitflächen (22), welche entlang der Förderstrecke (6) ausgedehnt sind und dazu eingerichtet sind, die Objekte (2) in dem Kanal (21) zu haltern, wobei die einzelnen Objekte (2) mit einem offenen Ende (23) nach oben weisend und mit einem geschlossenen Ende (24) nach unten weisend in dem Kanal (21) gehaltert werden,
- ein Gebläsesystem (25), welches einen oder mehrere Luftströme in einer derartigen Weise in den Kanal leitet, dass es die Objekte (2) entlang der Förderstrecke (6) bewegt und auf diese in dem Aufnahmeabschnitt (7) eine Akkumulationsschubkraft in Druckkontakt gegeneinander in einer Ausgangsrichtung (18) zu der Schraubenfördereinrichtung (8) hin ausübt,
wobei das Verfahren die Verwendung eines Systems (1) zum Anordnen von Objekten (2) an einer Arbeitsgruppe (3) mit mehreren Eintritten gemäß Anspruch 1 umfasst.

12. Verfahren nach Anspruch 11, wobei die Objekte (2) Kaffeekapseln sind und die Arbeitsgruppe (3) mit mehreren Eintritten eine Kaffeefüllmaschine ist.

## Revendications

1. Système (1) permettant d'agencer des objets (2) au niveau d'un groupe de travail (3) à plusieurs entrées, comprenant :
- un transporteur (5) adapté pour transporter les objets (2) orientés en une seule rangée le long d'un chemin de transport (6) jusqu'à une section de ramassage (7) du chemin de transport (6),
- un distributeur à vis (8) agencé au niveau de la section de ramassage (7) et s'étendant le long d'un nombre prédéterminé de points d'entrée (9) du groupe de travail (3) à plusieurs entrées, ledit distributeur à vis (8) comprenant une paroi hélicoïdale (13) formée et utilisable en rotation de manière à mettre en prise un nombre desdits objets (2) correspondant au nombre prédéterminé de points d'entrée (9) et positionner chacun des objets (2) mis en prise dans l'un desdits points d'entrée (9), respectivement,
**caractérisé en ce que** le système comprend :
- un dispositif d'orientation (4) permettant d'orienter les objets (2) avec une orientation souhaitée, et **en ce que**
- le transporteur (5) est relié au dispositif d'orientation (4), et **en ce que** le transporteur (5) comprend :
- une structure de support (20) formant un canal (21) étendu le long du chemin de transporteur (6) et adapté pour recevoir une seule rangée d'objets (2), et
- une ou plusieurs surfaces de support et de coulissement (22) étendues le long du chemin de transporteur (6) et adaptées pour supporter les objets (2) dans le canal (21), dans lequel les seuls objets (2) sont supportés dans le canal (21) avec une extrémité ouverte (23) faisant face vers le haut et avec une extrémité fermée (24) faisant face vers le bas,
- un système de soufflage (25) qui dirige un ou plusieurs flux d'air dans le canal de telle façon à déplacer les objets (2) le long du chemin de transporteur (6) et à exercer sur eux, dans la section de ramassage (7), une poussée d'accumulation en contact à pression les uns contre les autres dans une direction de sortie (18) vers le transporteur à vis (8),
le système (1) comprenant:
- un capteur de remplissage minimal (28) situé en amont de la section de ramassage (7) ou au niveau de la section de ramassage (7) dans une position correspondant à une longueur de rangée suffisante pour satisfaire à un critère de remplissage minimal, afin d'assurer la présence, dans la section de ramassage (7), d'une rangée dont le nombre d'objets (2) est supérieur au nombre prédéterminé de points d'entrée (9),
- un capteur de remplissage maximal (32) situé au niveau du transporteur (5) à une distance de sécurité du point de sortie du dispositif d'orientation (4) correspondant à un critère de remplissage maximal, afin d'éviter que les objets (2) ne s'accumulent dans le convoyeur (5) jusqu'à proximité du point de sortie du dispositif d'orientation (4),
- une unité de commande électronique (29) qui commande le dispositif d'orientation (4) en fonction des signaux provenant du capteur de remplissage minimal (28) et du capteur de remplissage maximal (32).

2. Système (1) selon la revendication 1, dans lequel la paroi hélicoïdale (13) forme une vis sans fin supportée pour tourner autour d'un axe de rotation (10) et actionnée en rotation autour de l'axe de rotation (10) au moyen d'un moteur électrique (11) et d'une transmission à courroie crantée (12).

3. Système (1) selon l'une quelconque des revendications précédentes, dans lequel l'épaisseur (14) et le pas (15) de la paroi hélicoïdale (13) sont sensiblement constants le long de l'extension longitudinale de celle-ci, excepté pour une extrémité avant amincie (17) pour mieux s'insérer entre deux objets (2).

4. Système (1) selon l'une quelconque des revendications précédentes, dans lequel un système guide (27) est formé le long de la paroi hélicoïdale (13) qui empêche des déplacements des objets (2) dans au moins une direction transversale par rapport à l'axe de rotation (10) de la paroi hélicoïdale (13),
ledit système guide (27) étant configuré de telle façon à maintenir la même orientation que les objets (2) tandis qu'ils sont individuellement reçus dans des rainures (16) formées par la paroi hélicoïdale (13) et portés chacun dans le point d'entrée (9) respectif.

5. Système (1) selon la revendication 4, dans lequel le système guide (27) forme une extension de surfaces guides du transporteur (5).

6. Système (1) selon l'une quelconque des revendications précédentes, dans lequel l'axe de rotation (10) de la paroi hélicoïdale (13) est sensiblement parallèle à une direction d'accumulation et/ou de sortie (18) des objets (2) dans la section de ramassage (7).

7. Système (1) selon l'une quelconque des revendications précédentes, dans lequel le transporteur (5) comprend des moyens qui exercent une poussée d'accumulation sur les objets (2) en contact à pression les uns contre les autres dans une direction de sortie (18) vers le transporteur à vis (8), dans la section de ramassage (7).

8. Système (1) selon l'une quelconque des revendications précédentes, dans lequel les surfaces de support et de coulissement (22) sont formées par :
- deux barres longitudinales latérales (30) étendues sur deux cotés latéraux opposés du chemin de transporteur (6) et espacées l'une de l'autre de telle façon à fournir toutes les deux un support par en dessous pour un bord circonférentiel (26) de l'objet (2),
- une troisième barre supérieure longitudinale (31) étendue sur un côté supérieur du chemin de transporteur (6) et espacée des barres latérales (30) de manière à fournir un guide supplémentaire depuis le dessus et un support antiglisse pour l'objet (2).

9. Système (1) selon l'une quelconque des revendications précédentes, dans lequel le chemin de transporteur (6) est sensiblement horizontal.

10. Système (1) selon l'une quelconque des revendications précédentes, comprenant ledit groupe de travail (3) à plusieurs entrées, dans lequel lesdits objets (2) sont des capsules de café et ledit groupe de travail (3) à plusieurs entrées est une machine de remplissage de café.

11. Procédé permettant d'agencer des objets (2) au niveau d'un groupe de travail (3) à plusieurs entrées, ledit procédé comprenant les étapes consistant à :
- orienter les objets (2) avec une orientation souhaitée,
- transporter les objets (2) avec l'orientation souhaitée en une seule rangée le long d'un chemin de transporteur (6) jusqu'à une section de ramassage (7) du chemin de transporteur (6) en utilisant un transporteur (5),
- agencer un distributeur à vis (8) avec une paroi hélicoïdale (13) au niveau de la section de ramassage (7) du chemin de transporteur (6) et étendre la paroi hélicoïdale (13) le long d'un nombre prédéterminé de points d'entrée (9) du groupe de travail (3),
- faire tourner la paroi hélicoïdale (13) de manière à mettre en prise un nombre d'objets (2) correspondant au nombre prédéterminé de points d'entrée (9) et de manière à placer chacun des objets (2) mis en prise dans l'un desdits points d'entrée (9),
**caractérisé en ce que** le transporteur (5) comprend :
- une structure de support (20) formant un canal (21) étendu le long du chemin de transporteur (6) et adapté pour recevoir une seule rangée d'objets (2), et
- une ou plusieurs surfaces de support et de coulissement (22) étendues le long du chemin de transporteur (6) et adaptées pour supporter les objets (2) dans le canal (21), dans lequel les seuls objets (2) sont supportés dans le canal (21) avec une extrémité ouverte (23) faisant face vers le haut et avec une extrémité fermée (24) faisant face vers le bas,
- un système de soufflage (25) qui dirige un ou plusieurs flux d'air dans le canal de telle façon à déplacer les objets (2) le long du chemin de transporteur (6) et à exercer sur eux, dans la section de ramassage (7), une poussée d'accumulation en contact à pression les uns contre les autres dans une direction de sortie (18) vers le transporteur à vis (8), dans lequel la méthode comprend l'utilisation d'un système (1) pour disposer des objets (2) dans un groupe de travail à entrées multiples (3) selon la revendication 1.

12. Procédé selon la revendication 11, dans lequel lesdits objets (2) sont des capsules de café et ledit groupe de travail (3) à plusieurs entrées est une machine de remplissage de café.
